# EUROPEAN PATENT SPECIFICATION

(11) **EP 1 653 664 B1**
(45) Date of publication and mention of the grant of the patent: **13.03.2013**
(21) Application number: 04256690.1
(22) Date of filing: 29.10.2004
(51) Int. Cl.: H04W 12/08

(54) **Wireless/wired mobile communication device, method and computer program medium with option to automatically block wireless communication when connected for wired communication**
Drahtlose/verdrahtete Kommunikationsvorrichtung, Verfahren und Computerprogramm-Medium mit der Option zum automatischen Blockieren der drahtlosen Kommunikation wenn für verdrahtete Kommunikation angeschlossen
Dispositif pour la communication sans fil et de câble, procédé et milieu de programme machine avec l'option pour bloquer automatiquement la communication sans fil une fois relié pour la communication de câble

(43) Date of publication of application: 03.05.2006
(73) Proprietor: Research In Motion Limited, Waterloo, ON N2L 3W8 (CA)
(72) Inventor: Kirkup, Michael G., Waterloo Ontario N2K 3X5 (CA); Brown, Michael K., Kitchener Ontario N2M 2Z2 (CA); Little, Herbert A., Waterloo Ontario N2T 2V8 (CA); Robertson, Ian, Waterloo Ontario N2J 1H4 (CA); Brown, Michael S., Waterloo Ontario N2K 4B1 (CA)
(74) Representative: Roberts, Gwilym Vaughan

(56) References cited:
- EP-A- 1 471 691
- WO-A-2004/043031
- US-A- 5 850 515
- US-B1- 6 243 756
- "A TECHNICAL OVERVIEW OF THE LUCENT VPN FIREWALL" WHITE PAPER LUCENT TECHNOLOGIES, XX, XX, August 2002 (2002-08), pages 1-35, XP002271173

## Description

### BACKGROUND OF THE INVENTION

### 1. Technical Field

This invention relates to apparatus, method and stored computer program media effecting improved communications network security for wired and wireless communications networks interfacing with a device capable of communicating with either type of network.

### 2. Description of Related Art

Many modem wireless mobile communication devices also include a wired connection port that may be utilized for connections to wired networks. There may also be a plurality of wireless communication ports made available (e.g., traditional RF, Bluetooth, infra-red (e.g., irda) and the like). If such wired and wireless communication ports are simultaneously connected to different networks, then it is possible for that device to constitute a security threat (e.g., as a potential gateway between networks having different security levels). For example, a wired network may typically be thought to have a higher level of security associated with it than does a wireless network.

Disparities in perceived security between different wired networks and/or sub-networks is also possible. For example, a feature known as "split tunneling" was created possibly to allow unhindered web surfing and corporate virtual private network (VPN) access simultaneously from remote personal computers. This permits a reduced load on the VPN gateway but it can also allow an application running on a client to maliciously forward packets from the Internet to the more security conscious enterprise network.

In the case of "split tunneling" it has been recognized that some of the potential danger can be minimized by turning off the split tunneling feature whenever the client is connected to the VPN. However, the potential security risk caused by simultaneous wireless and wired connection of a mobile communication device to networks having different security levels continues to present potential security issues.

A related problem is addressed in an earlier commonly assigned application 60/424,723 filed November 8, 2002 entitled "SYSTEM AND METHOD OF CONNECTION CONTROL FOR WIRELESS MOBILE COMMUNICATION DEVICES, now non-provisional application 10/698,602 filed October 31 , 2003 naming Michael G. Kirkup, Herbert A. Little, David Yach as inventors.

EP-A-1471692 discloses hybrid wired and wireless communication device which provides the user with an option to choose an automatic operating mode wherein a wireless communication module may be automatically deactivated when the device is linked to a wired communication network. However, this is a user option for the purpose of saving bandwidth and/or operating power, and is not described as having any intended security benefit. Indeed, since it is entirely a user-option, it would not be feasible for ensuring enterprise-wide security benefits.

### BRIEF SUMMARY OF THE INVENTION.

Aspects and features of the claimed subject matter are set out in the appended claims. A wired/wireless mobile communication device is provided with an enhanced security feature that permits automatic blocking of wireless communication when it is connected for wired communication. Such enhanced security may, if desired, be effected subject to an IT Policy residing in the device (e.g., as downloaded by an IT administrator).

A mobile wireless communication device having a plurality of communication ports may have a computer driven control circuit connected to control communication via each of those plural ports. An enhanced security sub-routine can be incorporated into that control circuit and adapted to automatically control (i.e., turn "off") at least one wireless communication port whenever a wired port is connected for use.

In the exemplary embodiments, the wired port can be a USB port and the wireless port can be a traditional RF transceiver circuit. However, the wireless port may also be a Bluetooth communication circuit, an infra-red or other optical communication circuit or any other wireless port. Similarly, the wired port may be a serial or parallel or any other wired digital data communication port.

In the exemplary embodiments, the security sub-routine effects automatic control in conformance with an IT Policy that also resides within the control circuit. This gives an IT administrator to power to set an IT Policy that might, for example, either enable the enhanced security feature or disable it.

Although control of the physical ports may be achieved in various ways, the exemplary embodiment achieves control over the RF wireless transceiver by calling an API for the RF transceiver and temporarily disabling it from use (i.e., effectively turning the transceiver "off") if a connection is sensed as being present at a wired USB port.

This invention may be embedded in hardware, software or a combination of hardware and software. The invention provides a method for achieving enhanced security in a wireless/wired mobile communication device by automatically blocking wireless communication when connected for wired communication.

### BRIEF DESCRIPTION OF THE DRAWINGS

These and other objects and advantages of this invention will be more completely understood and appreciated by careful study of the following more detailed description of at least one exemplary embodiment in conjunction with the accompanying drawings, in which:
FIG. **1** is an overall system wide schematic view of an exemplary wireless e-mail communication system incorporating a mobile wireless/wired communication device having an enhanced security sub-routine to enforce a resident IT Policy blocking simultaneous communication over another port when connected to a wired communication port in accordance with one exemplary embodiment of this invention;
FIG. **2** is an abbreviated schematic diagram of hardware included within an exemplary mobile wireless/wired communication device of FIG. **1**;
FIG. **3** is an exemplary abbreviated schematic flow chart of computer software (i.e., program logic) that may be used in the device of FIG. **2** for an enhanced sub-routine; and
FIG. **4** is an exemplary abbreviated schematic flow chart of computer software (i.e., program logic) that may be utilized in the device of FIG. **2** for an enhanced USB port driver sub-routine.

### DETAILED DESCRIPTION OF EXEMPLARY EMBODIMENTS

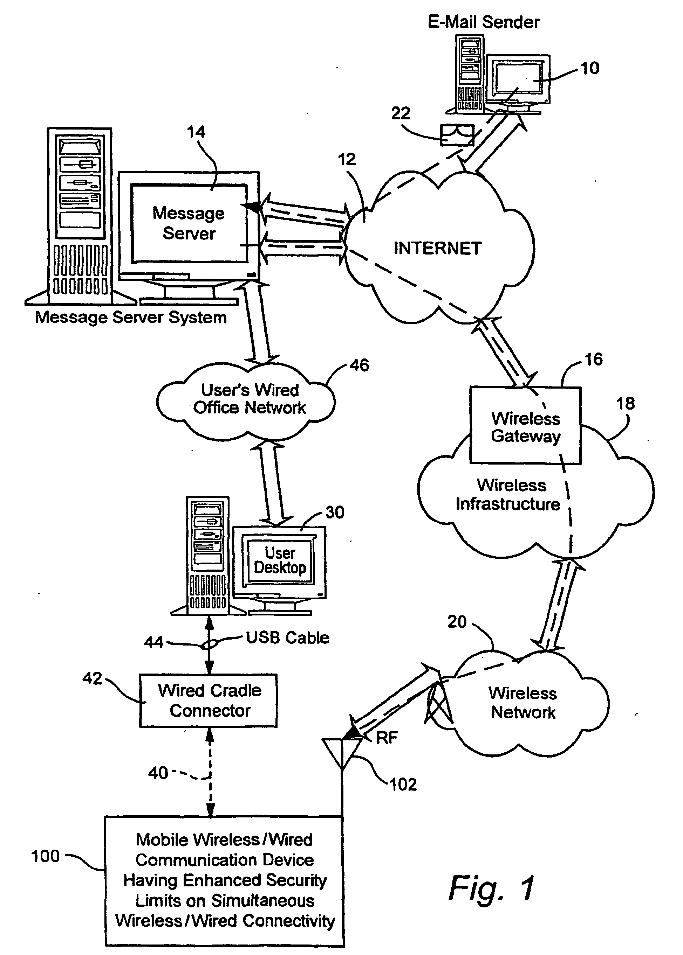

FIG. **1** is an overview of an exemplary communication system in which a wireless communication device **100** (with an optional wired connection port **40**) may be used in accordance with this invention. One skilled in the art will appreciate that there may be hundreds of different system topologies. There may also be many message senders and recipients. The simple exemplary system shown in FIG. **1** is for illustrative purposes only, and shows perhaps the currently most prevalent Internet e-mail environment.

FIG. **1** shows an e-mail sender **10**, the Internet **12**, a message server system **14**, a wireless gateway **16**, wireless infrastructure **18**, a wireless network **20** and a mobile communication device **100**.

An e-mail sender **10** may, for example, be connected to an ISP (Internet Service Provider) on which a user of the system has an account, located within a company, possibly connected to a local area network (LAN), and connected to the Internet **12**, or connected to the Internet **12** through a large ASP (application service provider) such as American Online™ (AOL). Those skilled in the art will appreciate that the systems shown in FIG. **1** may instead be connected to a wide area network (WAN) other than the Internet, although e-mail transfers are commonly accomplished through Internet-connected arrangements as shown in FIG. **1**.

The message server **14** may be implemented, for example, on a network computer within the firewall of a corporation, a computer within an ISP or ASP system or the like, and acts as the main interface for e-mail exchange over the Internet **12**. Although other messaging systems might not require a message server system **14**, a mobile device **100** configured for receiving and possibly sending e-mail will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1**, as they do not directly play a role in the invention described below. Message servers such as server **14** typically extend beyond just e-mail sending and receiving; they also include dynamic database storage engines that have predefined database formats for data like calendars, to-do lists, task lists, e-mail and documentation.

The wireless gateway **16** and infrastructure **18** provide a link between the Internet **12** and wireless network **20**. The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100**. The particular network **20** may be virtually any wireless network over which messages may be exchanged with a mobile communication device.

As shown in FIG. **1**, a composed e-mail message **22** is sent by the e-mail sender **10**, located somewhere on the Internet **12**. This message **22** typically uses traditional Simple Mail Transfer Protocol (SMTP), RFC **822** headers and multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100**. Some systems provide for automatic routing of such messages which are addressed using a specific e-mail address associated with the mobile device **100**. In a preferred embodiment, messages addressed to a message server account associated with a host system such as a home computer or office computer **30** which belongs to the user of a mobile device **100** are redirected from the message server **14** to the mobile device **100** as they are received.

Regardless of the specific mechanism controlling forwarding of messages to mobile device **100**, the message **22**, or possibly a translated or reformatted version thereof, is sent to wireless gateway 16. The wireless infrastructure **18** includes a series of connections to wireless network **20**. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

The wireless RF communication port connection is made via antenna **102** as depicted in FIG. **1**. However, the mobile wireless/wired communication device 100 also has a wired connection port **40** which mates with a connection in a wired cradle **42** to establish a wired digital communication link via a USB cable **44** to USB port of the user desktop computer **30**. As will be appreciated, the user's computer **30** is also connected to the user's wired office network **46** (as is the message server **14**).

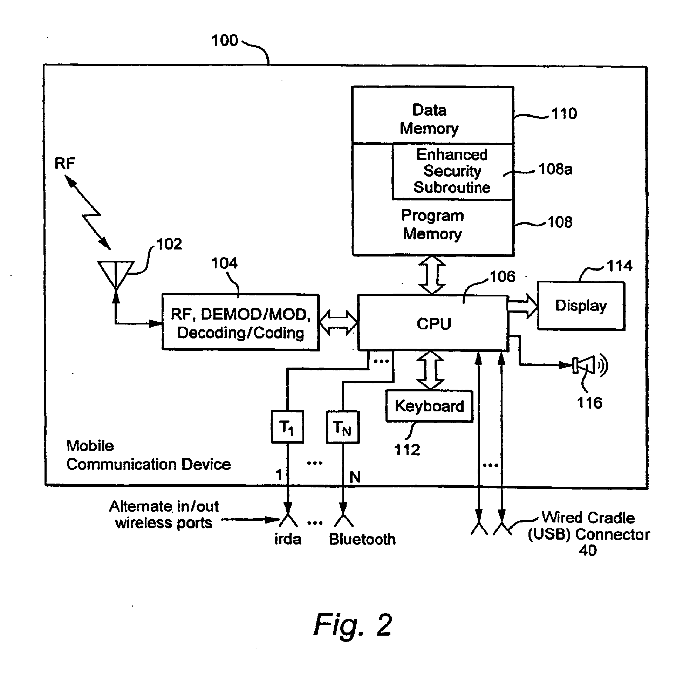

As depicted in FIG. **2**, mobile communication device **100** includes a suitable RF antenna **102** for wireless communication to/from wireless network **20**. Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110**). CPU **106** also communicates with a conventional keyboard **112**, display **114** (e.g., an LCD) and audio transducer or speaker **116**. A portion of program memory **108a** is available for storing an enhanced security sub-routine (which may also interface with and use an IT Policy resident in data memory **110**. Suitable computer program executable code is stored in portions of program memory **108a** to constitute the enhanced security sub-routine logic described below.

As also depicted in FIG. **2**, the CPU **106** is connected to a wired cradle USB connector **40** (which is, in effect, a USB port)and/or to any one or all of additional alternate input/output wireless ports (e.g., Irda, Blue tooth, etc.). As will be appreciated, such wireless ports will be associated with suitable transducer T₁ through T_{N}.

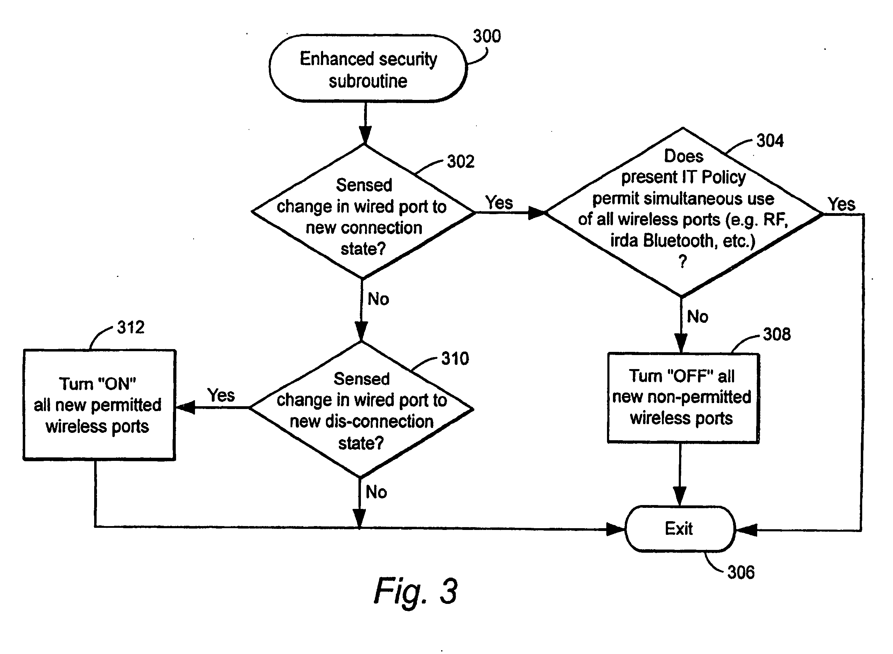

An enhanced security sub-routine is entered at **300** as depicted in FIG. **3** any time there is a sensed change in conductivity to a wired port. If the sensed change indicates a new connection state as determined at **302**, then the current IT Policy resident in the control circuitry (i.e., in the data memory **110** as previously downloaded by an IT administrator) is accessed at **304**. If the resident IT Policy permits simultaneous use of all wireless ports when also connected for wired communication via this particular wired port, as determined at **304**, then the sub-routine will be exited at **306**. However, if the IT Policy does not permit simultaneous use of all wireless ports when this particular wired port is connected for use, then all the non-permitted wireless ports (for that particular wired port connection) will be turned "off" at **308** before the sub-routine is exited at **306**.

If the sensed change in wired port connectivity is a new disconnection state as determined at **310**, then all now permitted wireless ports are turned "on" at **312** (i.e., again in accordance with the current resident IT Policy) before the sub-routine is exited at **306**.

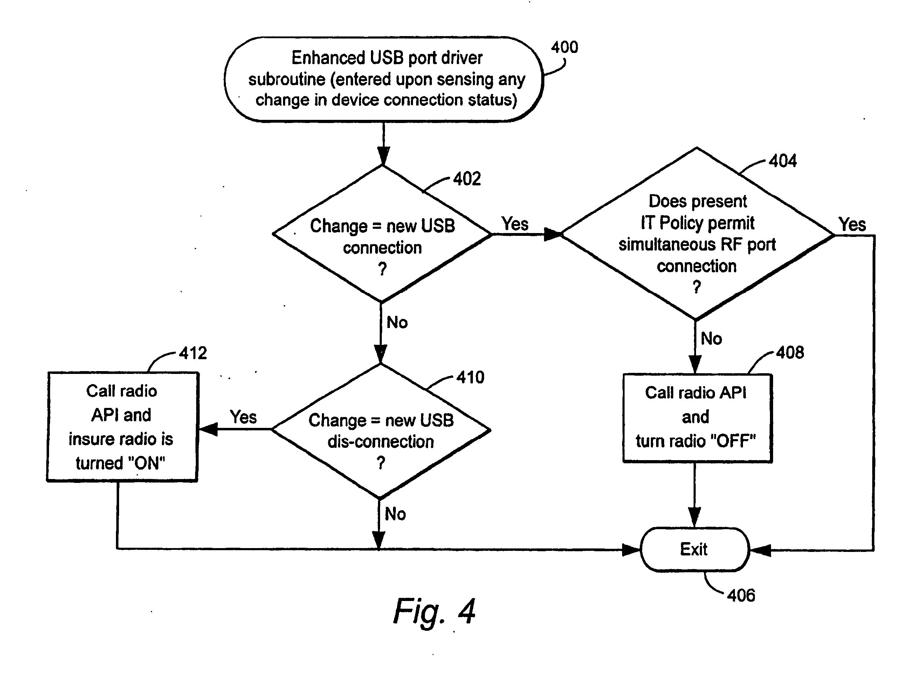

In another exemplary embodiment as depicted in FIG. **4**, the enhanced security sub-routine constitutes an enhanced USB port driver sub-routine entered at **400**. Here if the change indicates a new connection has been established at **402**, then the present IP Policy will be examined at **404** to see if simultaneous RF port connection is permitted for the newly connected USB port.. If so, then the sub-routine will be exited at **406**. If not, then the RF transceiver API is called at **408** and altered so as to disable or turn the RF transceiver "off" . On the other hand, if the detected change corresponds to a new disconnection state of the USB port as determined at **410**, then radio API is called at **412** and, in accordance with IT Policy, the API is altered so as to re-enable the radio or turn it "on" before exit of the sub-routine is taken at **406**.

When a typical "wireless" communication device is also connected to a wired computer network via the user's desktop software, it is technically connected to two networks at the same time. The two networks are the normally used wireless network and the wired network associated with the user's computer it is (typically temporarily) now also connected to. Some security conscious organizations may be concerned about possible transmission of information between the wired computer network and the wireless network via the bridging communication device.

An IT Policy now may be defined which will allow an IT administrator to set the device into an enhanced security mode which will prevent this problem from occurring. The enhanced security mode solves the problem by turning off the radio transceiver when the device is wire-connected to the computer. Using the USB port driver, it can be determined when the device is being "enumerated" by the computer and as such the radio is then turned off. The radio is then automatically turned back on when the device wired port is disconnected from the computer. In brief summary, one physical channel is disabled when another physical channel is detected. Bluetooth, USB, irda are examples of such physical channels.

In one exemplary embodiment, the new enhanced security feature might be described as "disable radio when cradled." In another, it might be "disable Bluetooth when cradled." In yet another, it might be "disable both radio and Bluetooth when cradled." For example, it might be desired to leave Bluetooth enabled even when cradled so as to still permit use of a user ear piece. By making the enhanced security feature subject to an IT Policy for such details of possible combinations and permutations, an IT administrator is given great flexibility to tailor the enhanced security mode for optimum use in a given environment.

While the invention has been described in connection with presently preferred exemplary embodiments, those skilled in the art will recognize that various changes and modifications may be made to the exemplary embodiments while yet retaining many of the novel features and advantages of this invention. Accordingly, all such variations and modifications are intended to be included within the scope of the appended claims.

## Claims

1. A mobile wireless communication device (100) having enhanced security comprising: a plurality of communication ports including at least one wireless port (1, N) and at least one wired port (40), a computer driven control circuit (106) connected to control communication via each of said plural ports, and at least one security sub-routine (300, 400) incorporated into said control circuit, the security sub-routine comprising code for automatically disabling, in accordance with a security policy resident within the control circuit, at least one wireless communication port when a wired port becomes connected for use.

2. A mobile wireless communication device as in claim 1 wherein said security sub-routine effects said automatic disabling by calling and utilizing an API for said at least one wireless communication port.

3. A mobile wireless communication device as in claim 1 wherein said at least one wireless port includes an infra-red wireless transceiver circuit and said at least one wired port includes a USB port.

4. A mobile wireless communications device as in claim 1 wherein said security sub-routine disables said wireless port when a new wired connection is sensed and enables said wireless port when a new wired disconnection is sensed.

5. A method for securing communication of a mobile wireless communication device (100) having a plurality of communication ports including at least one wireless port (1,N) and at least one wired port (40), the mobile communication device being arranged for wireless and wired connection, the method comprising:
sensing a connection state of the at least one wired port, and if the sensed change indicates connection of said wired port,
accessing at least one security sub-routine (400) resident in control circuitry of the device, the sub-routine representing a security policy resident within the control circuit, whereby the security subroutine causes at least one wireless communication port to be disabled.

6. A method as in claim 5 wherein said at least one wired communication port includes a USB port incorporated into a cradle for holding said mobile wireless communication device while it is wire-connected to a base unit.

7. A method as in claim 5 wherein said security sub-routine disables said wireless port when a new wired connection is sensed and enables said wireless port when a new wired disconnection is sensed.

8. A digital storage medium containing a computer program for controlling a mobile wireless communication device having enhanced security (100), comprising a plurality of communication ports including at least one wireless port (1, N) and at least one wired port (40), a computer driven control circuit (106) connected to control communication via each of said plural ports, and at least one security sub-routine (300, 400) incorporated into said control circuit, the security sub-routine comprising code for automatically disabling, in accordance with a security policy resident within the control circuit,at least one wireless communication port when a wired port becomes connected for use.

9. A digital storage medium as in claim 8 wherein said security sub-routine effects said automatic disabling by calling and utilizing an API for said at least one wireless communication port.

10. A digital storage medium as in claim 8 wherein said at least one wired communication port includes a USB port incorporated into a cradle for holding said mobile wireless communication device while it is wire-connected to a base unit.

11. A digital storage medium as in claim 8 wherein said security sub-routine disables said wireless port when a new wired connection is sensed and enables said wireless port when a new wired disconnection is sensed.

## Patentansprüche

1. Eine mobile drahtlose Kommunikationsvorrichtung (100) mit erweiterter Sicherheit, die aufweist: eine Vielzahl von Kommunikationsanschlüssen, die zumindest einen drahtlosen Anschluss (1, N) und zumindest einen verdrahteten Anschluss (40) umfassen, eine computergesteuerte Steuerungsschaltung (106), die verbunden ist, um Kommunikation über jeden der Vielzahl von Anschlüssen zu steuern, und zumindest eine Sicherheitsteilroutine (300, 400), die in der Steuerungsschaltung aufgenommen ist, wobei die Sicherheitsteilroutine Code aufweist zum automatischen Deaktivieren, in Übereinstimmung mit einer Sicherheitsrichtlinie, die in der Steuerungsschaltung enthalten ist, zumindest eines drahtlosen Kommunikationsanschlusses, wenn ein verdrahteter Anschluss zur Verwendung verbunden wird.

2. Eine mobile drahtlose Kommunikationsvorrichtung gemäß Anspruch 1, wobei die Sicherheitsteilroutine das automatische Deaktivieren durch Aufrufen und Verwenden einer API für den zumindest einen drahtlosen Kommunikationsanschluss bewirkt.

3. Eine mobile drahtlose Kommunikationsvorrichtung gemäß Anspruch 1, wobei der zumindest eine drahtlose Anschluss eine drahtlose Infrarot-Transceiver-Schaltung umfasst und der zumindest eine verdrahtete Anschluss einen USB-Anschluss umfasst.

4. Eine mobile drahtlose Kommunikationsvorrichtung gemäß Anspruch 1, wobei die Sicherheitsteilroutine den drahtlosen Anschluss deaktiviert, wenn eine neue verdrahtete Verbindung erfasst wird, und den drahtlosen Anschluss aktiviert, wenn eine neue verdrahtete Verbindungstrennung erfasst wird.

5. Ein Verfahren zum Sichern von Kommunikation einer mobilen drahtlosen Kommunikationsvorrichtung (100) mit einer Vielzahl von Kommunikationsanschlüssen, die zumindest einen drahtlosen Anschluss (1, N) und zumindest einen verdrahteten Anschluss (40) umfassen, wobei die mobile Kommunikationsvorrichtung für eine drahtlose und eine verdrahtete Verbindung ausgebildet ist, wobei das Verfahren aufweist:
Erfassen eines Verbindungszustands des zumindest einen verdrahteten Anschlusses, und wenn die erfasste Änderung eine Verbindung des verdrahteten Anschlusses anzeigt,
Zugreifen auf zumindest eine Sicherheitsteilroutine (400), die sich in einer Steuerungsschaltung der Vorrichtung befindet, wobei die Sicherheitsteilroutine eine Sicherheitsrichtlinie repräsentiert, die sich in der Steuerungsschaltung befindet, wodurch die Sicherheitsteilroutine veranlasst, dass zumindest ein drahtloser Kommunikationsanschluss deaktiviert wird.

6. Ein Verfahren gemäß Anspruch 5, wobei der zumindest eine verdrahtete Kommunikationsanschluss einen USB-Anschluss umfasst, der in einer Station zum Halten der mobilen drahtlosen Kommunikationsvorrichtung aufgenommen ist, während diese mit einer Basiseinheit über Draht verbunden ist.

7. Ein Verfahren gemäß Anspruch 5, wobei die Sicherheitsteilroutine den drahtlosen Anschluss deaktiviert, wenn eine neue verdrahtete Verbindung erfasst wird, und den drahtlosen Anschluss aktiviert, wenn eine neue verdrahtete Verbindungstrennung erfasst wird.

8. Ein digitales Speichermedium, das ein Computerprogramm aufweist zum Steuern einer mobilen drahtlosen Kommunikationsvorrichtung mit erweiterter Sicherheit (100), die eine Vielzahl von Kommunikationsanschlüssen aufweist, die zumindest einen drahtlosen Anschluss (1, N) und zumindest einen verdrahteten Anschluss (40) umfassen, eine computergesteuerte Steuerungsschaltung (106), die verbunden ist, um Kommunikation über jeden der Vielzahl von Anschlüssen zu steuern, und zumindest eine Sicherheitsteilroutine (300, 400), die in der Steuerungsschaltung aufgenommen ist, wobei die Sicherheitsteilroutine Code aufweist zum automatischen Deaktivieren, in Übereinstimmung mit einer Sicherheitsrichtlinie, die in der Steuerungsschaltung enthalten ist, zumindest eines drahtlosen Kommunikationsanschlusses, wenn ein verdrahteter Anschluss zur Verwendung verbunden wird.

9. Ein digitales Speichermedium gemäß Anspruch 8, wobei die Sicherheitsteilroutine das automatische Deaktivieren durch Aufrufen und Verwenden einer API für den zumindest einen drahtlosen Kommunikationsanschluss bewirkt.

10. Ein digitales Speichermedium gemäß Anspruch 8, wobei der zumindest eine verdrahtete Kommunikationsanschluss einen USB-Anschluss umfasst, der in einer Station zum Halten der mobilen drahtlosen Kommunikationsvorrichtung aufgenommen ist, während diese mit einer Basiseinheit über Draht verbunden ist.

11. Ein digitales Speichermedium gemäß Anspruch 8, wobei die Sicherheitsteilroutine den drahtlosen Anschluss deaktiviert, wenn eine neue verdrahtete Verbindung erfasst wird, und den drahtlosen Anschluss aktiviert, wenn eine neue verdrahtete Verbindungstrennung erfasst wird.

## Revendications

1. Dispositif de communication mobile sans fil (100) à sécurité améliorée, comprenant :
une pluralité de ports de communication incluant au moins un port sans fil (1, N) et au moins un port filaire (40) ;
un circuit de commande piloté par ordinateur (106), connecté afin de commander la communication à l'aide de chacun desdits multiples ports ; et
au moins une sous-routine de sécurité (300, 400), incorporée dans ledit circuit de commande, la sous-routine de sécurité comprenant du code destiné à inhiber automatiquement, en accord avec une politique de sécurité qui réside sur le circuit de commande, au moins un port de communication sans fil lorsqu'un port filaire se trouve connecté en vue d'être utilisé.

2. Dispositif de communication mobile sans fil selon la revendication 1, dans lequel ladite sous-routine de sécurité réalise ladite inhibition automatique en appelant et en utilisant une API pour ledit au moins un port de communication sans fil.

3. Dispositif de communication mobile sans fil selon la revendication 1, dans lequel ledit au moins un port sans fil comprend un circuit émetteur-récepteur sans fil à infrarouges et ledit au moins un port filaire comprend un port USB.

4. Dispositif de communication mobile sans fil selon la revendication 1, dans lequel ladite sous-routine de sécurité inhibe ledit port sans fil lorsqu'une nouvelle connexion filaire est détectée et valide ledit port sans fil lorsqu'une nouvelle déconnexion filaire est détectée.

5. Procédé de sécurisation des communications d'un dispositif de communication mobile sans fil (100) possédant une pluralité de ports de communication, y compris au moins un port sans fil (1, N) et au moins un port filaire (40), le dispositif de communication mobile étant conçu pour des connexions sans fil et filaire, le procédé comprenant les étapes consistant à :
détecter un état de connexion dudit au moins un port filaire et, si le changement détecté indique la connexion sur ledit port filaire,
accéder à au moins une sous-routine de sécurité (400) qui réside sur les circuits de commande du dispositif, la sous-routine représentant une politique de sécurité qui réside sur le circuit de commande, si bien que la sous-routine de sécurité commande l'inhibition d'au moins un port de communication sans fil.

6. Procédé selon la revendication 5, dans lequel ledit au moins un port de communication filaire comprend un port USB intégré à un berceau destiné à contenir ledit dispositif de communication mobile sans fil lorsqu'il est connecté par fil à une unité de base.

7. Procédé selon la revendication 5, dans lequel ladite sous-routine de sécurité inhibe ledit port sans fil lorsqu'une nouvelle connexion filaire est détectée et valide ledit port sans fil lorsqu'une nouvelle déconnexion filaire est détectée.

8. Support de stockage numérique contenant un programme d'ordinateur destiné à commander un dispositif de communication mobile sans fil à sécurité améliorée (100) comprenant une pluralité de ports de communication incluant au moins un port sans fil (1, N) et au moins un port filaire (40), un circuit de commande piloté par ordinateur (106) connecté pour commander la communication par chacun desdits ports multiples et au moins une sous-routine de sécurité (300, 400) intégrée dans ledit circuit de commande, la sous-routine de sécurité comprenant du code pour inhiber automatiquement, en accord avec une politique de sécurité qui réside sur le circuit de commande, au moins un port de communication sans fil lorsqu'un port filaire devient connecté en vue de son utilisation.

9. Support de stockage numérique selon la revendication 8, dans lequel ladite sous-routine de sécurité effectue ladite inhibition automatique en appelant et en utilisant une API pour ledit au moins un port de communication sans fil.

10. Support de stockage numérique selon la revendication 8, dans lequel ledit au moins un port de communication filaire comprend un port USB intégré à un berceau destiné à contenir ledit dispositif de communication mobile sans fil lorsqu'il est connecté par fil à une unité de base.

11. Support de stockage numérique selon la revendication 8, dans lequel ladite sous-routine de sécurité inhibe ledit port sans fil lorsqu'une nouvelle connexion filaire est détectée et valide ledit port sans fil lorsqu'une nouvelle déconnexion filaire est détectée.
